# EUROPÄISCHE PATENTANMELDUNG

(11) **EP 2 123 727 A2**
(43) Veröffentlichungstag der Anmeldung: **25.11.2009**
(21) Anmeldenummer: 09006361.1
(22) Anmeldetag: 12.05.2009
(51) Int. Cl.: C09J 7/00, C09J 7/02

(54) **Flächiges Klebemittel, wie Klebeband, Klebefolie oder Kleberand, insbesondere zur Verwendung im Baubereich**

(30) Priorität: 23.05.2008 DE 102008024804
(71) Anmelder: EWALD DÖRKEN AG, 58313 Herdecke (DE)
(72) Erfinder: Schröer, Jörn, 58313 Herdecke (DE); Raidt, Heinz Peter, 44227 Dortmund (DE)
(74) Vertreter: Gesthuysen, von Rohr & Eggert

(57) **Zusammenfassung**

Die Erfindung betrifft ein flächiges Klebemittel (1), wie Klebeband, Klebefolie oder Kleberand, insbesondere zur Verwendung im Baubereich, mit wenigstens einem mindestens einen Klebstoff aufweisenden Klebebereich (2). Um ein Klebemittel (1) zur Verfügung zu stellen, das eine gute Temperatur-Standfestigkeit, eine gute Dauerhaftigkeit und eine hohe Anfangshaftung hat, ist erfindungsgemäß vorgesehen, daß der Klebebereich (2) wenigstens einen ersten Teilbereich (4) mit einem ersten Klebstoff (5) und wenigstens einem zweiten Teilbereich (6) mit einem zweiten Klebstoff (7) aufweist und daß der erste Klebstoff (5) und der zweite Klebstoff (7) unterschiedliche Klebstoffeigenschaften aufweisen.

## Beschreibung

Die Erfindung betrifft ein flächiges Klebemittel, wie Klebeband, Klebefolie oder Kleberand, insbesondere zur Verwendung im Baubereich, mit mindestens einem wenigstens einen Klebstoff aufweisenden Klebebereich.

Flächige Klebemittel, wie Klebebänder, Klebefolien oder Kleberänder, müssen oft eine breite Anwendung abdecken. So variieren die zu verklebenden Partner abhängig
- von der chemischen Natur, insbesondere der Oberflächenspannung,
- von der Oberflächenrauhigkeit,
- vom Grad der Verschmutzung,
- von der Oberflächenhärte,
- von der Flexibilität,
- von der Dehnbarkeit und
- vom Grad der Feuchtigkeit.
   Des weiteren können unterschiedliche Umgebungsbedingungen auftreten. Hierbei handelt es sich insbesondere um die Temperatur, die (Luft-)Feuchtigkeit und kontaminierende Substanzen. So wird beispielsweise nur ein Teil der notwendigen Verklebungen in Innenräumen wie z, B. Werkshallen, d, h. in definierter Umgebung ausgeführt, Der größte Teil von Verklebungen folgt unter freiem Himmel und oft unter klimatisch ungünstigen Verhältnissen,
   Speziell im Baubereich ist die Verklebung von Baustoffen unter unterschiedlichsten Bedingungen und mit unterschiedlichsten Klebepartnern eine große Herausforderung. Oft werden beispielsweise Klebebänder aus sogenannten Hanklebstoffen eingesetzt. Sie dienen zur luft- oder wasserdichten Verklebung von Baufolien im Innen- und Außenbereich oder zum Anschluß von Bauelementen (z. B. Fenstern) an die tragende Konstruktion sowie zur luftdichten Verbindung ganzer Bauteile im Fertighausbau. Des weiteren werden Klebefolien z. B. bei Abdichtungsbahnen eingesetzt, die ein- oder beidseitig überwiegend vollflächig mit Kleber beschichtet sind.
   Wichtige Qualitätskriterien für Klebemittel der in Rede stehenden Art sind
- die Anfangshaftung,
- die Temperaturstandfestigkeit bei Belastungen und
- die Dauerhaftigkeit.

Klebeflächen der in Rede stehenden Art erfüllen diese Anforderungen kumulativ oft nicht. Zwar ist es grundsätzlich möglich, den Klebstoff eines Klebemittels zu modifizieren, um dessen Eigenschaften beispielsweise an bestimmte Temperatureinsatzbereiche besser anzupassen. Es ist allerdings nur möglich, die Eigenschaften insgesamt in Richtung besserer Klebeeigenschaften entweder bei höheren oder bei niedrigen Temperaturen zu verschieben, Verbesserungen auf der einen Seite haben immer Verschlechterungen auf der anderen Seite zur Folge.

Aufgabe der vorliegenden Erfindung ist es daher, ein Klebemittel der eingangs genannten Art insbesondere zur Verwendung im Baubereich zur Verfügung zu stellen, das sowohl in bezug auf die Anfangshaftung und die Standfestigkeit als auch in bezug auf die Dauerhaftigkeit der Verklebung gute Ergebnisse bietet, und zwar im wesentlichen unabhängig von der Art des Klebepartners oder den Umweltbedingungen.

Die vorgenannte Aufgabe ist bei einem flächigen Klebemittel der eingangs genannten Art erfindungsgemäß im wesentlichen dadurch gelöst, daß der Klebebereich wenigstens einen ersten Teilbereich mit einem ersten Klebstoff und wenigstens einen zweiten Teilbereich mit einem zweiten Klebstoff aufweist und daß der erste Klebstoff und der zweite Klebstoff unterschiedliche Klebstoffeigenschaften bezüglich der Klebbefestigung mit einem Untergrund bzw. einem Klebepartner aufweisen.

Durch die Verwendung wenigstens zweier unterschiedlicher Kleber in voneinander separaten bzw. abgeteilten Teilbereichen ist es möglich, die Vorteile beider Kleber zu vereinen, so daß die Nachteile nur noch eine untergeordnete Rolle spielen, Insbesondere wird bei der Erfindung eine solche Kombination von unterschiedlichen Klebern gewählt, bei der die negativen Eigenschaften des einen Klebers durch positive Eigenschaften des anderen Klebers ausgeglichen werden.

Von besonderem Vorteil ist es, wenn der eine Kleber als sogenannter weicher Kleber und der andere Kleber als sogenannter harter Kleber ausgebildet ist. Sehr weiche, hochklebrige Kleber haben eine geringe TemperaturStandfestigkeit und eine schlechte Dauerklebrigkeit. Harte Kleber, die hohe Erweichungstemperaturen und auch hohe Glasübergangstemperaturen haben, bringen bei richtiger Auswahl sehr gute Langzeitstabilität, aber nur eine geringe Anfangshaftung. Durch die Kombination eines Kleberpaars mit einem weichen und einem harten Kleber ergibt sich ein Klebemittel, das ein sehr großes Temperaturfenster für die Anwendung hat und sowohl bei der Temperatut-Standfestigkeit, der Dauerklebrigkeit und auch der Anfangshaftung sehr positive Eigenschaften bietet,

Die Kombination eines harten und eines weichen Klebers bietet im übrigen insbesondere auch dann besondere Vorteile, wenn das Klebemittel auf rauhen, insbesondere faserigen Oberflächen wirken soll. Weiche Kleber dringen besonders gut in die Zwischenräume der Fasern ein bzw. benetzen eine rauhe Oberfläche vollständig, haben aber die vorgenannten Nachteile der geringen Temperatur-Standfestigkeit und der schlechten Dauerklebrigkeit. Die Kombination weich/standfest bzw. hart löst auch hier wieder das Problem.

Es gibt eine Reihe von Kriterien, die weiche Kleber und harte Kleber charakterisieren. Hierzu gehören beispielsweise die Glasübergangs- und die Erweichungstemperatur. Die Glasübergangstemperaturen können im Prinzip beliebig sein. Für Bauanwendungen sollten sie zwischen -80 °C und +100 °C, bevorzugt zwischen -60 °C und +60 °C und insbesondere zwischen -40 °C und +20 °C liegen. Beim Einsatz unterschiedlicher Kleber für das erfiuadungsgemäße Klebemittel sollten die Differenzen der Glasübergangstemperaturen zwischen den beiden Klebern zwischen 10 und 150 °C, bevorzugt zwischen 20 und 100 °C und insbesondere zwischen 40 und 80°.C liegen.

Bei den Erweichungstemperaturen ist es so, daß diese zwischen 40 und 200 °C, bevorzugt zwischen 60 und 150 °C und besonders bevorzugt zwischen 75 und 130 °C liegen sollten. Die Differenzen der Erweichungstemperaturen bei Verwendung zweier unterschiedlicher Kleber sollten größer 10 °C, bevorzugt größer 20 °C und insbesondere größer 30 °C sein. Hinzuweisen ist in diesem Zusammenhang darauf, daß die vorgenannten Erweichungstemperaturen und Differenzen über Shear Adhesion Failure Temp. (SAFT) nach ASTM D4498 bei 500 g Gewicht bestimmt worden sind.

Das erfindungsgemäße Klebemittel läßt sich auch über die Schälkräfte definieren, wobei die Schälkräfte nach AFERA 4001, Peel bei 180 °C, T = 23 °C, 50 g/m² Kleber auf PET, Untergrund Stahl in 50 mm Breite bestimmt worden sind. Die Schälkräfte liegen bei mehr als 20 N/50 mm, bevorzugt sind sie größer 35 N/50 mm und insbesondere bevorzugt bei etwa 50 N/50 mm. Die Differenzen der Schälkräfte bei unterschiedlichen Klebern sind größer 3 N/50 mm, bevorzugt größer 10 N/50 mm und insbesondere größer 20 N/50 mm.

Ein weiteren Charakteristikum des erfindungsgemäßen Klebemittels ist die Anfangshaftung. Diese bezeichnet die Sofort-Haftkraft. Diese wurde vorliegend nach der Rolling Ball-Methode PSTC-6 ermittelt. Dabei läuft eine Stahlkugel eine schräge Fläche hinab in die Kleberbeschichtung hinein. Ermittelt wird die Strecke, bis die Kugel zum Stillstand kommt. Der Kugeltest wird in Zentimetern gemessen. Danach sollte die Anfangshaftung zwischen 1 und 150 cm, bevorzugt zwischen 4 und 60 cm und insbesondere zwischen 8 und 20 cm liegen. Die Differenzen der einzelnen Kleber bei der Anfangshaftung liegen zwischen 1, und größer 80 cm, bevorzugt zwischen 2 und 80 cm, weiter bevorzugt zwischen 3 und 70 cm und insbesondere zwischen 4 und 60 cm. Bei bevorzugten Ausführungsformen mit harten und weichen Klebern sind Kombinationen verwendet worden, bei denen die weichen Kleber Anfangshaftungswerte von 4 cm, 4 bis 8 cm und 2 bis 6 cm hatten, während die harten Kleber Anfangshaftungswerte von 40 cm, 60 cm und größer 80 cm hatten. Kombinationen aller vorgenannten weichen Kleber mit allen vorgenannten harten Klebern sind dabei getestet worden. Dabei hat sich gezeigt, daß die weichen Kleber gute Eigenschaften im Kühlbereich bzw. bei tiefen Temperaturen hatten. Demgegenüber ließ sich bei den harten Klebern eine hohe Scherund auch Schälfestigkeit bei hohen Temperaturen erzielen.

Ein anderes Charakteristikum des erfindungsgemäßen Klebemittels ist die Oberflächenspannung des Klebstoffs, die zwischen 20 und 75 mN/m liegen sollte. Bei zwei unterschiedlichen Klebern sollten die Differenzen der Oberflächenspannungen der beiden Klebstoffe größer 2 mN/m, bevorzugt größer 5 mN/m, weiter bevorzugt größer 10 mN/m und insbesondere größer 15 mN/m sein. Durch die Kombination zweier oder mehrerer Kleber mit sehr unterschiedlicher Affinität zu verschiedenen Oberflächenspannungen gelingt es, eine sehr universelle Klebefläche bereitzustellen.

Um eine hinreichend sichere Verklebung mit allen Klebepartnern bzw. Untergründen sicherstellen zu können, ist festgestellt worden, daß das Flächengewicht des Klebstoffs bzw. der Klebstoffbeschichtung des Klebebereichs mindestens 0,5 g/m² betragen sollte, Bevorzugt liegt das Flächengewicht zwischen 2 und 2.000 g/m², weiter bevorzugt zwischen 5 und 500 g/m² und insbesondere zwischen 50 und 300 g/m².

Die Auftragsdicke des Klebstoffs bzw. der Klebstoffbeschichtung sollte mindestens 0,5 µm betragen. Bevorzugt liegt die Auftragsdicke zwischen 2 µm bis 2 mm, weiter bevorzugt zwischen 5 und 500 µm und insbesondere zwischen 50 und 300 µm;

Besonders vorteilhaft ist es, wenn Höhen- bzw. Dickenunterschiede zwischen den beiden Klebern bestehen, Diese sollten mindestens 0,5 µm betragen. Bevorzugt liegen diese Unterschiede zwischen 5 und 500 µm, weiter bevorzugt zwischen 10 und 100 µm und insbesondere zwischen 20 und 50 µm. Ein Überstehen des einen Klebers gegenüber dem anderen läßt sich im übrigen auch dadurch erreichen, daß der eine Klebstoff zumindest bereichsweise auf den anderen Klebstoff aufgebracht ist, also über diesen übersteht bzw. über diesen hinausragt. Besonders günstig ist es in diesem Zusammenhang, wenn insbesondere der weichere Klebstoff über den härteren Klebstoff hinausragt, da dieser Klebstoff sich dann besonders gut an eine rauhe Oberfläche des Untergrundes/Klebepartners anschmiegen kann. Insbesondere bei faserigen Oberflächen kann der weiche Klebstoff dann in die Faserzwisehenräume eindringen. Durch den Überstand des einen Klebstoffs wirkt die Anpreßkraft dann insbesondere nur auf diesen Teil der Klebefläche und wird dort konzentriert.

Bei Verwendung von zwei Klebern sollte der Anteil jedes Klebers zwischen 1 und 99 % am Anteil des insgesamt verwendeten Klebstoffs liegen. Bevorzugt liegt der Anteil zwischen 20 und 80 % und insbesondere zwischen 40 und 60 %. Bei mehr als zwei Klebern sollte der prozentuale Anteil jedes Klebers zwischen 1 und 98 %, bevorzugt zwischen 10 und 80 % und insbesondere zwischen 25 und 50 % liegen.

Bei einer bevorzugten Ausführungsform der vorliegenden Erfindung sind die beiden Kleber bzw. Klebstoffe und damit die Teilbereiche streifenförmig im Längs-, Quer- und/oder Schrägfonnat mit gleichen oder unterschiedlichen Streifenbreiten ausgebildet. Die Streifenbreiten sollten zwischen 0,5 mm und 10 cm, bevorzugt zwischen 1 mm und 5 cm und insbesondere zwischen 2 mm und 1 cm liegen. Die Streifen können gleiche oder aber unterschiedliche Breiten haben.

Im übrigen ist es aber auch möglich, daß der eine Teilbereich als Matrix und der andere Teilbereich als in die Matrix eingebettete oder darauf aufgebrachte Domäne(n) ausgebildet ist. Bei einer solchen Ausgestaltung sollten die Domänen -bei runden Domänen - einen Durchmesser zwischen 0,5 mm und 3 cm, bevorzugt zwischen 1 mm und 1,5 cm und insbesondere zwischen 2 mm und 8 mm haben. Bei nicht-runden Domänen sind entsprechende Flächenmaße vorzusehen. Wie zuvor bereits ausgeführt worden ist, können die Domänen in freie Stellen der Matrix eingebracht oder aber auch auf eine untere Kleberschicht aus anderem Klebstoff aufgebracht sein. Gleiches gilt natürlich auch bei der Ausbildung in Streifen.

Im übrigen ist darauf hinzuweisen, daß der Klebebereich und/oder die einzelnen Teilbereiche nicht vollflächig mit dem oder den Klebern beschichtet sein müssen. Einzelne Bereiche können damit auch klebstofffrei bleiben.

Unabhängig davon, ob die einzelnen Bereiche nun streifenförmig oder als Matrix ausgebildet sind, bietet es sich an, daß zumindest die seitlich äußeren begrenzenden Bereiche des Klebbereichs von dem harten Klebstoff gebildet werden. Damit kann dann der weichere Kleber innerhalb der standfesteren härteren Kleberausbildung "gefangen" gehalten werden. Bei einer Matrixausbildung der Kleberanordnung sollten dementsprechend dann die Domänen den weichen Klebstoff ausmachen, während die Matrix aus dem harten, standfesten Klebstoff auszuführen ist. Ein unerwünschtes Verlaufen des Klebers muß dann nicht befürchtet werden.

Die vorliegende Erfindung bezieht sich grundsätzlich auf beliebige Klebeflächen. Vorzugsweise werden jedoch Klebebänder, Klebefolien oder Kleberänder von Bahnen erfindungsgemäß ausgestaltet. Ein Klebeband besteht in der Regel aus einem Träger, gegebenenfalls einer Verstärkung, dem Kleber bzw. nach der vorliegenden Erfindung den wenigstens zwei Klebern und einer abziehbaren, meist silikonisierten Abdeckung, die auch als Liner bezeichnet wird. Bei der Herstellung können die Klebstoffe entweder auf den Träger oder auf den Liner aufgebracht werden. Alternativ kann der Träger auch rückseitig silikonisiert sein, so daß das Klebeband ohne Liner aufgewickelt werden kann.

Des weiteren ist die Erfindung auch auf sogenannte Transferklebebänder anwendbar, bei denen letztlich nur der Kleber ohne Träger zum Einsatz kommt.

Eine Klebefolie besteht in der Regel aus einer Folie an sich, die den Träger darstellt, der Klebschicht und einem Liner.

Mit Kleberändern werden Folien ausgerüstet, die während oder nach ihrer Verarbeitung miteinander verbunden werden sollen. Der Kleberand besteht dementsprechend in der Regel aus dem Substrat als Träger, der randseitigen Klebeschicht und einem Liner.

Wenngleich grundsätzlich alle Arten von Klebstoffen im Zusammenhang mit der vorliegenden Erfindung eingesetzt werden können, eignet sich bevorzugt die Verwendung von Haftklebern. Haftklebstoffe werden als Schmelzklebstoffe oder als Flüssigklebstoffe verarbeitet. Schmelzklebstoff wird durch Temperaturerhöhung verflüssigt und mit Pumpendruck in eine Düse, z. B, eine Breitschlitzdüse gefördert. Der erkaltete Film bildet den Kleber des Klebemittels.

Flüssigklebstoff wird durch Zugabe von Lösemittel oder von Wasser hergestellt. Der Flüssigkleber wird in pastöser oder flüssiger Form beispielsweise auf einen Träger aufgetragen und anschließend getrocknet. Möglich sind hier auch stabile oder instabile Schäume, Letztere erleichtern der Auftrag und fallen spätestens bei der Trocknung überwiegend in sich zusammen. Die physikalische Trocknung der aufgebrachten Klebstoffbeschichtung bzw. des Klebstoffilms, beispielsweise in Öfen, kann gegebenenfalls durch eine Strahlenhärtung (TR-, UV-, Beta- oder Gammastrahlung) ergänzt bzw. ersetzt werden.

Als Rohstoffe zur Herstellung von Haftklebern können Haftklebstoffe (PSA) z. B. auf Basis von Synthese- und Naturkautschuk, Butyl- oder Styrolkautschuk, Polyurethanen, Polyacrylaten, Polyisobutylen, Acrylnitril-Copolymeren, SBS- bzw. SIS-Blockcopolymeren o.ä. verwendet werden. Auch Dispersionsklebstoffe wie Acrylat-, Polyvinyliden-, Butadien-Styrol-, Kautschukoder Polyurethan-Dispersionen können eingesetzt werden, Als weitere Stoffklasse kommen Hotmelts auf Basis von z.B. Acrylatcopolymeren, Polyamiden, gesättigten Polyestern, Ethylen-Vinylacetat-Copolymerisaten, Silicone oder generell olefinische Copolymere in Frage. Generell können aber auch anorganische Bindemittel sowie solche auf Basis nachwachsender Rohstoffe eingesetzt werden. Die vorgenannten Rohstoffe können einzeln oder in Mischung verwendet werden.

Im übrigen sind auch Additive, Stabilisatoren, Farbmittel, Hilfsmittel und Füllstoffe einsetzbar. Als Stabilisatoren seien beispielsweise Antioxidantien, UV-Stabilisatoren und UV-Absorber genannt.

Von Vorteil für bestimmte Anwendungen ist es, einen unterbrochenen Auftrag und/oder die Verwendung eines porösen Klebers oder entsprechender Rohstoffe für den Kleber vorzusehen. Auf diese Weise ergibt sich dann ein dampfdurchlässiger Klebbereich, so daß die diesbezügliche Klebefläche insbesondere im Baubereich gut eingesetzt werden kann. Typische Werte der Dampfdurchlässigkeit liegen bei mehr als 100 g/m²•24h. Die vorgenannte Angabe bezieht sich auf den Kleber bzw. die Klebeschicht.

Nachfolgend werden Ausführungsbeispiele der Erfindung anhand der Zeichnung näher beschrieben. Dabei zeigt
- Fig. 1: eine schematische Querschnittsansicht eines erfindungsgemäßen Klebemittels,
- Fig. 2: eine schematische Querschnittsansicht einer zweiten Ausführungsform eines erfindungsgemäßen Klebemittels,
- Fig. 3: eine schematische Querschnittsansicht einer dritten Ausführungsform eines erfindungsgemäßen Klebemittels,
- Fig. 4 - 11: Draufsichten auf verschiedene Klebebereich unterschiedlicher Klebeflächen und
- Fig. 12: eine schematische Darstellung eines Herstellungsverfahrens für ein erfindungsgemäßes Klebemittel.

In den Fig, 1 bis 3 ist das Grundprinzip des erfindungsgemäßen flächigen Klebemittels 1 in unterschiedlichen Ausführungsformen dargestellt. Bei allen Ausführungsformen ist es so, daß das Klebemittel 1, bei dem es sich um ein Klebeband, eine Klebefolie oder einen Kleberand handeln kann, einen Klebbereich 2 und einen Träger 3 aufweist. Bei dem Träger 3 kann es sich grundsätzlich auch um eine Folie oder um ein Substrat handeln, In den dargestellten Ausrührungsbeispielen weist der Klebbereich 2 wenigstens einen ersten Teilbereich 4 mit einem ersten Klebstoff 5 und einen zweiten Teilbereich 6 mit einem zweiten Klebstoff 7 auf. Die Teilbereiche 4, 6 sind voneinander getrennt, die Klebstoffe 5 und 7 also unvermischt. Wichtig ist, daß die beiden Klebstoffe 5, 7 verschieden sind und unterschiedliche Klebstoffeigenschaften bezüglich der Klebbefestigung mit einem Untergrund bzw. einem Klebepartner aufweisen.

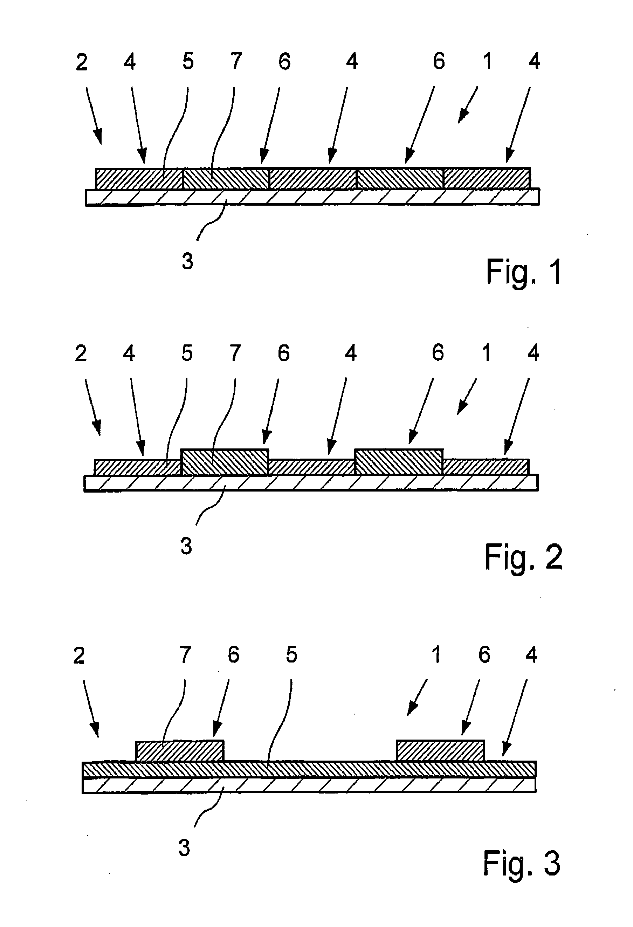

Bei den in den Fig. 1 bis 3 dargestellten Ausführungsformen handelt es sich jeweils um einen Schnitt entlang der Breite des Klebemittels 1. Die Länge ist in der Regel sehr viel größer als die Breite und kann theoretisch unendlich sein. Bei der in Fig. 1 dargestellten Ausführungsform ist der Klebbereich 2 auf dem Träger 3 in fünf nebeneinander angeordnete Teilbereiche 4, 6 aufgeteilt. Vorliegend sind fünf Teilbereiche 4, 6 vorgesehen, wobei der erste, dritte und fünfte Teilbereich 4 den ersten Klebstoff 5 und der zweite und der vierte Teilbereich 6 den zweiten Klebstoff 7 aufweisen. Die Schichtdicke aller Teilbereiche 4, 6 ist gleich. Auch die Breite der einzelnen Teilbereiche 4, 6 ist identisch. Bei dem dargestellten Ausführungsbeispiel ist insbesondere in den beiden äußeren Teilbereichen 4 ein harter bzw. standfester Klebstoff 5 mit hoher Glasübergangs- und Erweichungstemperatur und damit mit hoher TemperaturStandfestigkeit vorgesehen, der eine gute Langzeitstabilität hat. Der weiche Kleber 7 im zweiten und vierten Teilbereich 6 hat hingegen eine hohe Anfangshaftung, so daß das Klebemittel 1 insgesamt eine gute Temperatur-Standfestigkeit, eine Langzeitstabilität und eine hohe Anfangshaftung hat.

Das in Fig. 2 dargestellte Ausführungsbeispiel entspricht im wesentlichen dem in Fig. 1 dargestellten, wobei die Schichtdicke des zweiten und des vierten Teilbereichs 6 mit dem weichen Klebstoff 7 größer ist als die Schichtdicke des ersten, dritten und fünften Teilbereichs 4.

Auf einem ähnlichen Prinzip beruht die Ausführungsform gemäß Fig. 3, bei der der Träger 3 zunächst vollflächig mit dem einen Klebstoff, vorliegend dem härteren Klebstoff, beschichtet ist. Diese Beschichtung bildet den Teilbereich 4, dessen Breite der Breite des Klebbereichs 2 entspricht. Auf den ersten Teilbereich 4 sind als zweiter Teilbereich 6 Domänen mit dem zweiten Kleber 7 - dem weichen Klebstoff - aufgebracht. Dementsprechend steht der zweite Klebstoff 7 des zweiten Teilbereichs 6 über den ersten Klebstoff 5 des ersten Teilbereichs 4 über.

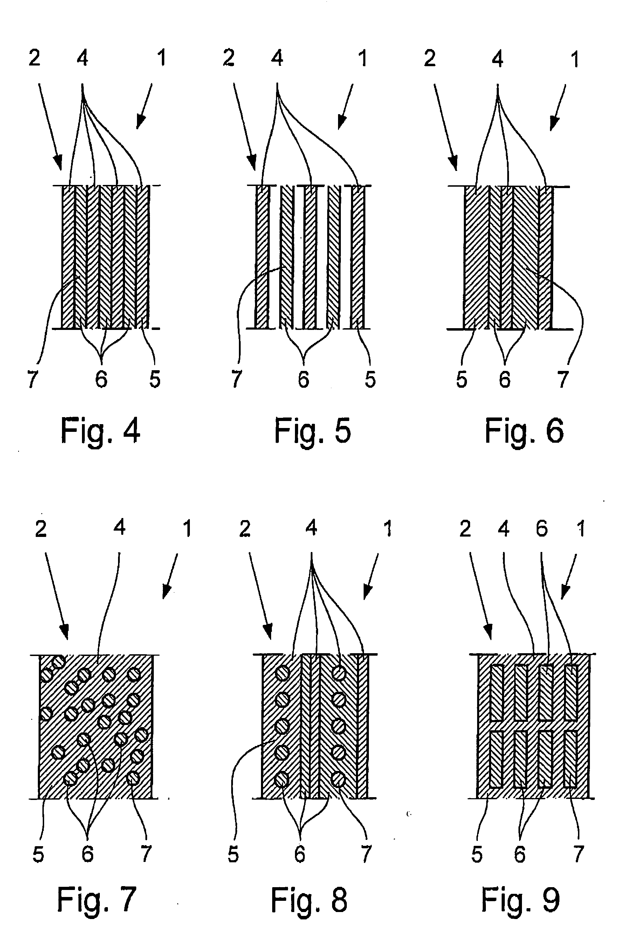

In den Fig. 4 bis 11 sind Draufsichten auf verschiedene Klebebereiche 2 von Klebemitteln 1 dargestellt. Bei der Ausführungsform gemäß Fig. 4 sind die Teilbereiche 4, 6 streifenförming mit parallel zueinander verlaufenden Streifen gleicher Breite ausgebildet, Dabei bildet jeder Streifen einen Teilbereich 4, 6. Die einzelnen Streifen liegen unmittelbar aneinander an. Dabei versteht es sich, daß der Klebebereich 2 entsprechend den Prinzipien der Fig. 1 bis 3 ausgebildet sein kann, wobei auch Mischformen oder andere Prinzipien grundsätzlich möglich sind.

Bei der in Fig. 5 dargestellten Ausführungsform sind die einzelnen Teilbereiche 4, 6 mit den unterschiedlichen Klebstoffen 5, 7 ebenfalls alternierend angeordnet, wobei jedoch jeder Teilbereich 4, 6 über einen klebstofffreien Bereich, also einen nicht klebenden Streifen, vom nächsten Teilbereich 6, 4 beabstandet sind.

Bei der Ausführungsform gemäß Fig. 6 ist der Klebebereich 2 ebenfalls streifenförmig mit alternierenden Teilbereichen 4, 6 aufgebaut wobei die Streifen jedoch unterschiedliche Breiten haben.

Bei der Ausführungsform gemäß Fig. 7 ist der erste Teilbereich 4 mit dem ersten - harten - Klebstoff 5 als Matrix vorgesehen, während die in oder auf der Matrix vorgesehenen Domänen als zweite Teilbereiche 6 den zweiten - weichen - Klebstoff aufweisen. Der zweite Teilbereich 6 wird also durch einzelne Domänen gebildet.

Bei der Ausführungsform gemäß Fig. 8 ist es so, daß ein streifenförmiger Aufbau mit einem Matrix/Domänen-Aufbau kombiniert worden ist. Die Matrix wird dabei durch einen dickeren Streifen mit dem einen Klebstoff 5 gebildet, während die Domänen in der Matrix in Linie angeordnet sind. Es versteht sich, daß diese linienartige Ausbildung der Domänen nicht erforderlich ist.

Bei der in Fig. 9 dargestellten Ausführungsform ist der Klebebereich 2 gitterartig ausgebildet. Dabei macht der erste Teilbereich 4 mit dem ersten Klebstoff 5 die Gitterstruktur aus, während die Gitterfreiräume die Domänen des zweiten Teilbereichs 6 sind, in denen sich der zweite Klebstoff 7 befindet.

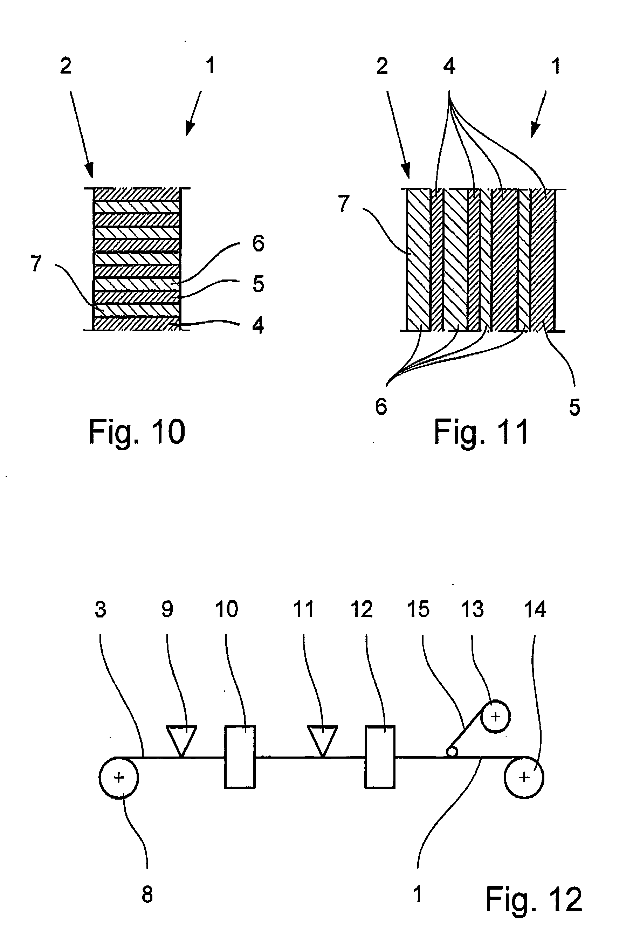

Bei der in Fig. 10 dargestellten Ausführungsform sind ebenfalls streifenförmige Teilbereiche vorgesehen, diese verlaufen jedoch - anders als bei der Ausführungsform gemäß Fig. 4 - nicht in Längsrichtung sondern quer dazu, wobei alternierend der eine und der andere Klebstoff 5, 7 vorgesehen ist.

Die Ausführungsform gemäß Fig. 11 entspricht vom Prinzip her der Ausführungsform gemäß Fig. 6, wobei jedoch eine größere Anzahl an breiten und schmaleren Streifen vorgesehen ist. Im übrigen ist es bei dieser Ausführungsform so, daß auf der einen Seite des Klebemittels 1 überwiegend der eine Klebertyp 5 und auf der anderen Seite überwiegend der andere Klebertyp 7 verwendet wird. Dementsprechend sind auf beiden Seiten jeweils zwei relativ breite Streifen mit unterschiedlichen Klebern 5, 7 vorgesehen. Dazwischen befinden sich schmalere Streifen mit dem anderen Kleber 7, 5, um die gewünschten positiven Eigenschaften des Klebemittels 1 zu erzielen.

Es wird ausdrücklich datauf hingewiesen, daß es sich bei den in den Fig. 4 bis 11 dargestellten Ausführungsformen nur um Beispiele von möglichen Ausbildungen des Klebebereichs 2 bzw. der Teilbereiche 4, 6 handelt. Es versteht sich, daß es eine Vielzahl möglicher anderer Ausbildungen und Ausgestaltungen gibt. Insbesondere versteht es sich, daß der Klebebereich nicht nur einen Teilbereich mit einem harten und einem weichen Kleber aufweisen kann, sondern daß auch ein Klebebereich mit drei oder mehr unterschiedlichen Klebern vorgesehen sein kann. So sind beispielsweise Kombinationen eines weichen mit einem mittelharten und einem sehr harten Kleber möglich. Für bestimmte Anwendungsfälle können in weiterer Abstufung auch ein vierter oder noch weitere unterschiedliche Kleber vorgesehen sein. Bezogen auf die Anfangshaftung kann beispielsweise ein weicher Kleber mit einer Anfangshaftung von 4 cm, ein etwas härterer Kleber mit einer Anfangshaftung von 14 cm, ein härterer Kleber mit einer Anfangshaftung von 40 cm und ein sehr harter Kleber mit einer Anfangshaftung größer 60 cm vorgesehen sein.

Darüber hinaus können auch zwei oder mehrere Kleber mit unterschiedlich starker Oberflächenspannung vorgesehen sein, so daß sich letztlich eine sehr universelle Klebefläche ergibt. So kann beispielsweise bei drei unterschiedlichen Klebern der eine Kleber eine Oberflächenspannung von 25 mN/m, der zweite Kleber eine Oberflächenspannung von 35 mN/m und der vierte Kleber eine Oberflächenspannung von 45 mN/m haben. Es versteht sich, daß die Differenzen der Oberflächenspannungen zwischen zwei Klebern auch größer oder kleiner als die vorgenannten Werte sein können.

Nachfolgend wird anhand der Fig. 12 das grundsätzliche Herstellungsverfahren des erfindungsgemäßen Klebemittels 1 erläutert. Zunächst wird der Träger 3, bei dem es sich - wie bereits ausgeführt - um einen Träger an sich, eine Folie oder ein Substrat handeln kann, von einer Abwicklung 8 abgerollt. Der erste Klebstoff 5 wird mit einem Auftragswerk 9 aufgetragen. Zum Auftragen können Walzen, Düsen, ein Streichtisch, Rakel, eine Bedruckung oder ein Besprühen in Frage kommen. Hieran schließt sich optional eine Nachbehandlung 10 an, bei der es sich um eine Trocknung, Härtung und/oder Kühlung handeln kann. Der Auftrag des zweiten Klebstoffs 7 erfolgt vorliegend mit dem Auftragswerk 11, optional gefolgt von einer Nachbehandlung 12. Werden weitere Kleber verwendet, können sich entsprechende weitere Stufen 11, 12 anschließen. Die Stufen 11, 12 können in gleicher oder anderer Weise wie die Stufen 9, 10 durchgeführt werden. Anschließend läuft ein Liner 15 von einer Abwicklung 13 zu und das erfindungsgemäße Klebemittel 1 wird mit einer Aufwicklung 14 aufgerollt.

Hinzuweisen ist darauf, daß alternativ mehrere Auftragswerke 9, 11 oder mehrere Nachbehandlungen 10, 12 direkt hintereinander angeordnet sein können.

Um z. B, den gewünschten streifenweisen Auftrag von Klebstoff zu erreichen, kann Schmelzklebstoff anstatt über eine Breitschlitzdüse über getrennte Einzeldüsen als nebeneinanderliegende Raupen aufgetragen werden. Wenn mit Flüssigkleber gearbeitet wird, kann der Kleber in zwei Arbeitsgängen aufgetragen werden. Im ersten Durchgang wird z. B. mit einem kammförmigen Rakel der Kleber nur in getrennten Streifen mit freibleibenden Zwischenräumen aufgetragen. Nachdem dieser Kleber getrocknet worden ist, können in einem weiteren Schritt die Lücken gefüllt werden.

Eine weitere Möglichkeit besteht darin, einen Flüssigkleber aus Einzeldüsen unmittelbar nebeneinander aufzutragen. Auch eine Mehrkanaldüse ist möglich. Dies hat den Vorteil, daß nur ein Auftragswerk für alle Kleber benötigt wird und die Komponenten 11 und 12 entfallen.

Im übrigen ist es so, daß statt eines einteiligen Liners auch ein geteilter Liner verwendet werden kann. Dies ist immer dann vorteilhaft, wenn das erfindungsgemäße Klebemittel erst an ein erstes Bauteil und im Anschluß an ein zweites Bauteil angeschlossen werden soll.

Bei durchgeführten Versuchen ist folgendes ermittelt worden:

### 1) Hotmelt-Klebeband

Band 1: Auf einen 55 mm breiten, Corona-vorbehandelten PP-Träger wird mit Hilfe einer auf 130 °C temperierten Kammstruktur-Düse ein Acrylat-Hotmelt inklusive Vernetzer (hierbei handelte es sich um Novarad RC 51112 der Firma Novamelt) in 7 mm breiten Streifen in einer Dicke von 80 µm aufgetragen.

Der Abstand der insgesamt 5 Streifen beträgt 3 mm. Nach der Abkühlung erfolgt die Vernetzung durch Bestrahlung mit UV-Licht unter Verwendung eines Mitteldruck-Quecksilber-Strahlers mit 240 W/cm. Die Liniengeschwindigkeit beträgt 15 m/min. In einem zweiten Schritt werden mit Hilfe von 4 Einzeldüsen die entsprechenden Lücken mit dem Hotmelt PS 5061 der Firma Novamelt aufgefüllt. Die Kleberauftragstemperatur beträgt 160 °C, die Auftragsdicke ebenfalls 80 µm.

Band 2: Die Herstellung erfolgt analog zu Band 1, wobei vollflächig nur Acrylat-Hotmelt in 49 mm Breite und gleicher Dicke aufgebracht wird.

Band 3: Die Herstellung erfolgt analog zu Band 1, wobei vollflächig nur PS 5061 in 49 mm Breite und gleicher Dicke aufgebracht wird.

Die so jeweils hergestellten Klebebänder werden auf einem kalandrierten PP-Spinnvlies verklebt. Anschließend werden die Schälkräfte in [N] nach AFERA 4001 (jedoch in anderen Breiten, bei anderen Verklebetemperaturen und anderen Verklebungsdauern) überprüft.

Bei dem Band 1 ergibt sich nach einer Minute eine Schälkraft von 19 N. Zum Vergleich werden das vollflächig mit dem Acrylat beschichtete Klebeband (Band 2) bzw. mit PS 5061 beschichtete Klebeband (Band 3) ebenfalls mit einem PP-Vlies verklebt. Bei dem Band 2 ergibt sich nach einer Minute ein Wert von 2 N, während bei Band 3 sich ein Wert von 20 N ergibt. Nach vierundzwanzig Stunden ergibt sich bei Band 1 ein Wert von 20 N, bei Band 2 ein Wert von 13 N und bei Band 3 ein Wert von 20 N.

Im übrigen wurde die Alterung für drei Monate bei 80 °C überprüft. Bei Band 1 ergab sich ein Wert von 25 N, bei Band 2 ein Wert von 26 N und bei Band 3 ein Wert von 5 N, was kohäsives Versagen bedeutet.

Die Bänder 1 bis 3 wurden im übrigen auf eine PP-Folie geklebt. Nach fünf Minuten ergab sich bei Band 1 ein Wert von 50 N, bei Band 2 ein Wert von 7 N und bei Band 3 ein Wert von 80 N. Eine Verklebung auf einer PP-Folie nach drei Monaten bei 80 °C ergab bei Band 1 einen Wert von 74 N, bei Band 2 einen Wert von 72 N und bei Band 3 einen Wert von 6 N, was kohäsives Versagen bedeutet.

### 2) Hotmeltklebeband auf thermoplastischem Polyurethan

Band 4: Auf einen 60 mm breiten, Corona-vorbehandelten 60 g/m² LDPE-Träger werden mit Hilfe einer auf 165 °C temperierten Mehrkanaldüse zwei Kleber in Streifen alternierend nebeneinander aufgetragen. Dabei handelt es sich um Novamelt PS 5006 und um Novamelt PS 2041 der Firma Novamelt. Die fünf Streifen von PS 5006 sind je 5 mm breit und haben eine Dicke von 125 µm. Die vier Streifen von PS 2041 sind 4 mm breit, haben eine Dicke von 135 µm und liegen zwischen den Steifen von PS 5006. Die Liniengeschwindigkeit beträgt 55 m/min.

Band 5: Die Herstellung erfolgt analog Band 4, wobei Novamelt PS 5006 (Tg = 10 °C) vollflächig auf den 60 g/m² LDPE-Träger in 50 mm Breite und 125 µm Dicke aufgetragen worden ist.

Band 6: Die Herstellung erfolgt analog Band 4, wobei Novamelt PS 2041 (Tg = -9 °C) vollflächig auf 60 g/m² LDPE-Träger in 50 mm Breite und 135 µm Dicke aufgetragen worden ist.

Die Bänder 4 bis 6 wurden anschließend auf eine TPU-Folie aus Desmopan 3 85 der Firma Bayer geklebt.
a) Bei einer Verklebung im Frühjahr bei 5 °C ergab sich bei Band 4 eine Schälkraft von 40 N, bei Band 5 von 5 N und bei Band 6 ergab sich nach Erreichen von 50 N ein Versagen des Trägers.
b) Nach sieben Tagen zwischen 5 °C und 10 °C ergab sich bei Band 4 nach Erreichen von 51 N ein Versagen des Trägers, bei Band 5 ergaben sich 25 N und bei Band 6 ergab sich nach Erreichen von 53 N ein Versagen des Trägers.
c) Nach sieben Monaten, unter anderem Sommer mit einer maximal gemessenen Temperatur von 69 °C, ergab sich bei Band 4 nach Erreichen von 48 N ein Versagen des Trägers, bei Band 5 nach Erreichen von 50 N ein Versagen des Trägers und bei Hand 6 ein Wert von 32 N.

### 3) Kleberand

In analoger Weise wie beim Hotmelt-Klebeband werden die beiden Kleber auf einen 1,5 m breiten Verbund aus einem kalandrierten 120 g/m² PET-Vlies und 60 g/m² TPU-Beschichtung randseitig aufgetragen. Die PU-Beschichtung ragt im Randbereich 35 mm über das PET-Vlies hinaus, der Auftrag von 4+3 Streifen erfolgt von der Vliesseite aus in 32 mm Gesamtbreite. Auch die vollflächigen Beschichtungen der Einzelkleber erfolgen in 32 mm Breite.

Die Praxis-Verklebung auf der PU-Seite wird parallel zu dem Versuch 2 mit Hotmelt-Klebeband durchgeführt, mit folgenden Ergebnissen:
a) Bei Verklebung im Frühjahr bei 5 °C nach zehn Minuten ergibt sich bei Rand 1 ein Betrag von 34 N, bei Rand 2 ein Betrag von 4 N und bei Rand 3 ein Betrag von 45 N, wobei die Verbundhaftung versagt.
b) Nach sieben Tagen bei 5 °C bis 10 °C ergibt sich bei Rand 1 ein Betrag von 45 N, wobei die Verbundhaftung versagt, bei Rand 2 ein Betrag von 18 N und bei Rand 3 ein Betrag von 47 N, wobei die Verbundhaftung versagt.
c) Nach sieben Monaten (u. a. Sommer mit maximal gemessener Temperatur von 69 °C) ergibt sich am Rand 1 ein Wert von 48 N, wobei die Verbundhaftung versagt, beim Rand 2 ein Betrag von 50 N, wobei die Verbundhaftung versagt, und beim Rand 3 ein Betrag von 24 N.

### 4) Dispersionsklebeband

Band 7: Eine einen Meter breite PET-Folie mit einem Flächengewicht von 50 g/m² wird mit Hilfe eines Knife over Roll-Rakels mit einer Dispersion eines carboxylierten Styrol-Butadien-Copolymers (Litex S 45 C der Firma Polymer Latex, Tg = 1 °C) beschichtet und anschließend bei 80 °C getrocknet. Das Auftragsgewicht beträgt 45 g/m² trocken. In einem zweiten Schritt wird mit Hilfe einer strukturierten Walze eine Kleberdispersion auf Basis Acrylat (Plextol X 4880 der Firma Polymer Latex, Tg = -40 °C) punktweise aufgetragen und bei 70 °C getrocknet. Der Durchmesser der Punkte (Domänen) beträgt 5 mm, ihre Dicke im getrockneten Zustand 15 µm und die Flächenbelegung 23 %. Im Anschluß wird der Liner zugeführt und die Folie in 10 cm breite Streifen geschnitten.

Band 8: Die Herstellung erfolgt wie bei dem Band 7, wobei der zweite Schritt nicht durchgeführt wird. Statt dessen wird der Liner direkt zugeführt und 10 cm breite Streifen geschnitten.

Band 9: In analoger Weise wie bei Band 7 wird nur Plextol X 4880 aufgetragen und getrocknet, so daß sich eine Trockenauflage von 45 g/m² ergibt. Anschließend wird der Liner zugeführt und in 10 cm breite Streifen geschnitten.

Eine Schälprüfung auf einer 100 g/m² LDPE-Folie bei 23 °C nach einer Minute ergibt bei Band 7 einen Wert von 65 N, bei Band 8 einen Wert von 15 N und bei Band 9 einen Wert von 77 N.

Nach 24 h bei 23 °C wird eine konstante Last von 10 N aufgelegt und die Temperatur auf 50 °C erhöht. Das erfindungsgemäße Band 7 und das Vergleichsband 8 sind nach weiteren 24 h noch nicht abgefallen. Band 9 versagt hingegen nach dreiundzwanzig Minuten.

### Bezugszeichenliste

- 1: Klebemittel
- 2: Klebebereich
- 3: Träger
- 4: erster Teilbereich
- 5: erster Klebstoff
- 6: zweiter Teilbereich
- 7: zweiter Klebstoff
- 8: Abwicklung
- 9: Auftragswerk
- 10: Nachbehandlung
- 11: Auftragswerk
- 12: Nachbehandlung
- 13: Abwicklung
- 14: Aufwicklung
- 15: Liner

## Patentansprüche

1. Flächiges Klebemittel (1), wie Klebeband, Klebefolie oder Kleberand, insbesondere zur Verwendung im Baubereich, mit mindestens einem wenigstens einen Klebstoff aufweisenden Klebebereich (2),
**dadurch gekennzeichnet,**
**daß** der Klebebereich (2) wenigstens einen ersten Teilbereich (4) mit einem ersten Klebstoff (5) und wenigstens einem zweiten Teilbereich (6) mit einem zweiten Klebstoff (7) aufweist und daß der erste Klebstoff (5) und der zweite Klebstoff (7) unterschiedliche Klebstoffeigenschaften aufweisen.

2. Klebemittel nach Anspruch 1, **dadurch gekennzeichnet, daß** der eine Klebstoff (5) als weicher Kleber und der andere Klebstoff (7) als harter Kleber ausgebildet ist.

3. Klebemittel nach Anspruch 1 oder 2, **dadurch gekennzeichnet, daß** die Klebstoffe (5, 7) Glasübergangstemperaturen zwischen -80 °C bis +100 °C, vorzugsweise zwischen -60 °C und +60 °C und insbesondere zwischen -40 °C und +20 °C aufweisen und daß die Differenzen der Glasübergangstemperaturen zwischen zwei Klebern (5, 7) zwischen 10 bis 150 °C, bevorzugt zwischen 20 und 100 °C und insbesondere zwischen 40 und 80 °C liegen.

4. Klebemittel nach einem der vorhergehenden Ansprüche, **dadurch gekennzeichnet, daß** die Kleber (5, 7) Erweichungstemperaturen zwischen 40 und 200 °C, bevorzugt zwischen 60 und 150 °C und insbesondere zwischen 75 und 130 °C aufweisen und daß die Differenzen der Erweichungstemperaturen zwischen zwei Klebern (5, 7) größer 10 °C, vorzugsweise größer 20 °C und insbesondere größer 30 °C sind.

5. Klebemittel nach einem der vorhergehenden Ansprüche, **dadurch gekennzeichnet, daß** die Schälkräfte des Klebemittels (1) (gemessen gemäß AFERA 4001, Peel bei Winkel 180°, T = 23 °C, 50 g/m² Kleber auf PET, Untergrund Stahl, in 50 mm Breite) größer 20 N/50 mm, vorzugsweise größer 35 N/50 mm und insbesondere 50 N/50 mm betragen und daß die Differenzen der Schälkräfte zwischen zwei Klebern (5, 7) größer 3 N/50 mm, vorzugsweise größer 10N/50 mm und insbesondere größer 20 N/50 mm sind.

6. Klebemittel nach einem der vorhergehenden Ansprüche, **dadurch gekennzeichnet, daß** eine Anfangshaftung gemäß der Rolling Ball-Methode zwischen 1 bis 150 cm, bevorzugt 4 bis 60 cm und insbesondere 8 bis 20 cm vorgesehen ist und daß die Differenz der Anfangshaftung zwischen zwei Klebern (5, 7) 1 und größer 80 cm, bevorzugt 2 bis 80 cm, weiter bevorzugt 3 bis 70 cm, vorzugsweise 4 bis 60 cm und insbesondere 5 bis 20 cm beträgt.

7. Klebemittel nach einem der vorhergehenden Ansprüche, **dadurch gekennzeichnet, daß** die Oberflächenspannung der Kleber (5, 7) zwischen 20 und 75 mN/m beträgt und daß die Differenz der Oberflächenspannungen zwischen zwei Klebern (5, 7) größer 2 mN/m, bevorzugt größer 5 mN/m, besonders bevorzugt größer 10 mN/m und insbesondere größer 15 mN/m beträgt.

8. Klebemittel nach einem der vorhergehenden Ansprüche, **dadurch gekennzeichnet, daß** das Flächengewicht der mit Kleber (5, 7) beschichteten Flächenteile größer 0,5 g/m², vorzugsweise zwischen 2 und 2.000 g/m², weiter bevorzugt zwischen 5 und 500 g/m² und insbesondere zwischen 50 und 300 g/m² ist.

9. Klebemittel nach einem der vorhergehenden Ansprüche, **dadurch gekennzeichnet, daß** eine Auftragsdicke der Kleber (5, 7) von mindestens 0,5 µm, bevorzugt zwischen 2 µm und 2 mm, besonders bevorzugt zwischen 5 und 500 µm und insbesondere zwischen 50 und 300 µm vorgesehen ist und daß die Differenz der Auftragsdicken zwischen dem einen und dem anderen Kleber (5, 7) oder der Überstand des einen Klebers (7) gegenüber dem anderen Kleber (5) mindestens 0,5 µm, bevorzugt zwischen 5 und 500 µm, weiter bevorzugt zwischen 10 und 100 µm und insbesondere zwischen 20 und 50 µm beträgt.

10. Klebemittel nach einem der vorhergehenden Ansprüche, **dadurch gekennzeichnet, daß** der prozentuale Anteil eines Klebers bei Verwendung von zwei Klebern (5, 7) zwischen 1 und 99 %, bevorzugt zwischen 20 und 80 % und insbesondere zwischen 40 und 60 % beträgt oder daß der prozentuale Anteil eines Klebers bei mehr als zwei Klebern zwischen 1 und 98 %, bevorzugt 10 und 80 % und insbesondere zwischen 25 und 50 % beträgt.

11. Klebemittel nach einem der vorhergehenden Ansprüche, **dadurch gekennzeichnet, daß** die Teilbereiche (4, 6) streifenförmig in Längs-, Quer- und/oder Schrägformat mit gleichen oder unterschiedlichen Streifenbreiten ausgebildet sind oder daß der eine Teilbereich (4) als Matrix und der andere Teilbereich (5) als in die Matrix eingebettete Domain ausgebildet ist.

12. Klebemittel nach einem der vorhergehenden Ansprüche, **dadurch gekennzeichnet, daß** bei streifenförmig ausgebildeten Teilbereichen (4, 6) die Streifen eine Breite zwischen 0,5 mm und 10 cm, bevorzugt zwischen 1 mm und 5 cm und insbesondere zwischen 2 mm und 1 cm haben oder daß bei Anordnung von Domänen in einer Matrix die Domänen einen Durchmesser zwischen 0,5 mm und 3 cm, bevorzugt zwischen 1 mm und 1,5 mm und insbesondere zwischen 2 mm und 8 mm aufweisen.

13. Klebemittel nach einem der vorhergehenden Ansprüche, **dadurch gekennzeichnet, daß** zumindest die seitlich äußeren, begrenzenden Bereiche des Klebbereichs (2) von dem harten Kleber gebildet werden.

14. Klebemittel nach einem der vorhergehenden Ansprüche, **dadurch gekennzeichnet, daß** der Klebbereich (2) und/oder die Teilbereiche (4, 6) nur teilweise mit Klebstoff beschichtet sind und/oder daß wenigstens ein Kleber eine poröse Klebschicht ausbildet,

15. Klebemittel nach einem der vorhergehenden Ansprüche, **dadurch gekennzeichnet, daß** die Kleber als Haftkleber ausgebildet sind.
